# EUROPEAN PATENT SPECIFICATION

(11) **EP 4 216 504 B1**
(45) Date of publication and mention of the grant of the patent: **09.12.2026**
(21) Application number: 22152727.8
(22) Date of filing: 21.01.2022
(51) Int. Cl.: H04L 41/147, H04L 41/0806, H04L 41/5054, H04L 43/0805, H04L 41/0853, H04L 41/0894, H04L 41/0896, H04L 43/16, H04L 43/0852, H04L 43/0876

(54) **METHOD FOR PREDICATIVELY OPERATING A COMMUNICATION NETWORK**
VERFAHREN ZUM PRÄDIKATIVEN BETREIB EINES KOMMUNIKATIONSNETZWERKS
PROCÉDÉ D'EXPLOITATION PRÉDICTIVE D'UN RÉSEAU DE COMMUNICATION

(43) Date of publication of application: 26.07.2023
(73) Proprietor: Deutsche Telekom AG, 53113 Bonn (DE)
(72) Inventor: XU, Bangnan, 64291 Darmstadt (DE); SEUL, Georg, 50823 Cologne (DE); WEILER, Richard, 10785 Berlin (DE); BAYER, Nico, 61231 Bad Nauheim (DE)
(74) Representative: RDL Patentanwälte PartG mbB

(56) References cited:
- EP-A1- 1 944 922
- WO-A1-2021/067140
- US-A1- 2005 228 892
- US-A1- 2016 344 604
- US-A1- 2021 321 301

## Description

The invention relates to a method for operating a communication network wherein the communication network provides a connection with a quality of service (QoS) assigned for a terminal device. The invention further relates to a resource reservation system for a communication network and a computer program product.

A communication network, e.g. a cellular network, provides connections, e.g. wireless connections, for an increasing plurality of terminal devices. The terminal devices connect to the communication network for accessing an increasing number of applications or services which respectively require an increasing quality of service (QoS), e.g. a minimum latency and/or a maximum bitrate, to be assigned to the corresponding connection.

The higher is the QoS assigned to the connection the larger is an amount of spectral resources, i.e. radio resources, to be allocated to the connection by the communication network. For instance, a sports broadcasting service comprising a plurality of cameras or an advanced video production service, particularly when being accessed simultaneously by a plurality of terminal devices, require the communication network to allocate large amounts of spectral resources to the connections thereof.

The plurality of terminal devices competes for available spectral resources of the communication network in every single moment. However, the available spectral resources are limited. As a consequence, the communication network either refuses a connection or assigns a lower QoS, i.e. an insufficient QoS, to a connection when the QoS required by the connection is currently not available and, hence, can not be assigned thereto.

US 2021/0321301 A1 discloses a method for operating a communication network, wherein a resource reservation system receives a connection request indicating a QoS from a terminal device and configures the communication network by means of slicing in order to possibly assign the requested QoS to a connection of the terminal device.

In other words, the communication network does not reliably provide connections with the required QoS assigned. As a consequence, users of the terminal devices and providers of the applications or services may suffer from bad experiences.

It is, therefore, an object of the invention to suggest a method for operating a communication network which allows for the communication network to reliably allocate spectral resources to connections of terminal devices. Further objects of the invention are providing a communication network and a computer program product.

One aspect of the invention is a method for operating a communication network wherein the communication network provides a connection with a QoS assigned for a terminal device. The terminal device executes an application or uses a service accessible via the connection and requires the QoS to be assigned to the connection by the communication network. The terminal device may be configured as a smartphone, a tablet, a notebook, a desktop computer and the like.

According to the invention, a business support system (BSS) of a resource reservation system receives a reservation request, the reservation request indicating a QoS for an upcoming connection to be provided by the communication network for the terminal device and an application or service accessed by the terminal device via the upcoming connection, the business support system has an availability of the indicated QoS for the upcoming connection checked by a bookkeeper decision engine (BDE) of the resource reservation system and sends a reservation confirmation when the availability of the indicated QoS is confirmed by the bookkeeper decision engine, and the communication network will assign the indicated QoS to the upcoming connection of the terminal device. The upcoming connection is provided by the communication network for the terminal device after the reservation, i.e. at a time distance from the reservation. The reservation request allows for blocking spectral resources of the communication network in advance.

It is noted that the terms "business support system", "bookkeeper decision engine" and further terms used herein for addressing an entity do not limit the scope of the protection. Rather, the terms used herein are defined by the respective roles within the inventive method.

The business support system and the bookkeeper decision engine help to make sure that the required QoS will be assigned and the required spectral resources will be allocated by the communication network to the upcoming connection of the terminal device, i.e. at a future time. The reservation request relates to or addresses a later spectral state of the communication network independently from a current spectral state of the communication network at the time of reservation.

The business support system may comprise a customer portal, i.e. a frontend, a user may log into, e.g. for selecting the application or service accessed by the terminal device via the upcoming connection and causing the reservation request to be sent. The user may handle the customer portal by means of said terminal device or by means of a different terminal device.

The bookkeeper decision engine enables the communication network to prospectively plan an allocation of spectral resources, i.e. radio resources (RR), to connections of terminal devices. Accordingly, a user of the terminal device and a provider of an application or service trust in the upcoming connection when the reservation confirmation is received.

The business support system may send a reservation offer when the availability of the indicated QoS is not confirmed, the reservation offer indicating an available lower QoS for the upcoming connection. The reservation offer may be accepted as the reservation confirmation, and the application or the service may be adjusted accordingly, for instance by configuring a higher latency or a lower bitrate. The communication network will assign the lower QoS to the upcoming connection of the terminal device instead of the indicated QoS. Accordingly, the user of the terminal device and the provider of the application or service trust in the upcoming connection when the reservation offer is accepted.

In an embodiment, the reservation request, the reservation confirmation and the reservation offer are transmitted using a dedicated protocol and/or at a specific QoS. The dedicated protocol supports any communication within the resource reservation system. The specific QoS allows for a high priority of the communication related to QoS reservation.

The reservation request preferably indicates a time of the upcoming connection, a location of the terminal device at the indicated time and/or a number of upcoming connections requiring the indicated QoS. The indicated time may comprise a start time, an end time and/or a duration of the upcoming connection. The location may comprise an indication of a radio cell the terminal device will be arranged in and/or a position of the terminal device within a radio cell the terminal device will be arranged in for the upcoming connection. The number of upcoming connections indicates a number of terminal devices simultaneously accessing the application or service at the indicated time. Said additional indications allow the bookkeeper decision engine to precisely check an availability of the indicated QoS for the upcoming connection.

Having the availability checked, still according to the invention, comprises sending an availability request to the bookkeeper decision engine via a service management and orchestration (SMO) engine of the resource reservation system, the availability request comprising indications of the reservation request, and receiving an availability confirmation from the bookkeeper decision engine via the service management and orchestration engine when the bookkeeper decision engine finds an availability of the indicated QoS. The service management and orchestration engine substantially forwards the indications of the reservation request and the availability confirmation from the business support system to the bookkeeper decision engine and vice versa.

Additionally, the service management and orchestration engine may assign the indicated QoS to the upcoming connection, e.g. instantiate a slice of the communication network for the upcoming connection or allow for a higher priority of the upcoming connection, and notify the successful instantiation to the business support system and/or the bookkeeper decision engine.

In an inventive embodiment, finding the availability comprises sending a QoS prediction request to a QoS prediction service (pQoS) of the communication network and receiving a QoS prediction report from the QoS prediction service, the QoS prediction request comprising indications of the availability request and the QoS prediction report indicating a highest available QoS, a determined number of resource blocks (RB), the number depending on an achievable throughput per resource block, required for the indicated QoS, a total number of resource blocks and a number of free resource blocks at the location of the terminal device. A resource block is a smallest physical spectral unit to be allocated to a connection.

The QoS prediction service predicts a load of the communication network and evaluates an availability of spectral resources at the time of the upcoming connection and at the location of the terminal device at the time of the upcoming connection.

The bookkeeper decision engine or the QoS prediction service may determine the number of resource blocks required for the indicated QoS dependent of the location of the terminal device and a device capability of the terminal device by means of an estimation or a calculation. The bookkeeper decision engine or the QoS prediction service may take into account local conditions of a radio cell the terminal device will be arranged in at the time of the upcoming connection, e.g. geographical conditions of or a possible density of terminal devices being simultaneously arranged in the radio cell. The bookkeeper decision service or the QoS prediction service may further take into account a configuration of the terminal device, e.g. a maximum sending bit rate or a maximum reception bit rate. The more information is used by the bookkeeper decision engine or the QoS prediction service the more accurate is the determined number of resource blocks. Full information enables calculating the number of resource blocks. Little information requires estimating the number of required resource blocks.

According to the invention, a capacity usage policy manager of the resource reservation system provides the bookkeeper decision engine with a capacity usage policy and the bookkeeper decision engine finds the availability by applying the provided capacity usage policy to the QoS prediction report. The capacity usage policy manager is configured for enforcing a style of handling the total number of available resource blocks provided by the communication network. The style of handling is defined by the capacity usage policy provided for the bookkeeper decision engine. The capacity usage policy may comprise a plurality of availability rules. Applying the provided capacity usage policy may comprise checking a conformity of the indications comprised by the QoS prediction report with the capacity usage policy.

Still according to the invention, the capacity usage policy manager selects the capacity usage policy dependent of the indicated application and provides the selected capacity usage policy. The capacity usage policy manager comprises a plurality of different capacity usage policies. The plurality of different capacity usage policies allows for different applications and services to be treated differently with respect to QoS reservation. A flexibility of the communication network in allocating spectral resources to upcoming connections is increased.

The bookkeeper decision engine may find the availability when the calculated number of the resource blocks required for the indicated QoS is lower than a predetermined first percentage of free resource blocks and a number of reserved resource blocks is lower than a predetermined second percentage of available resource blocks, the first percentage and the second percentage being defined by availability rules of the capacity usage policy. The first and second percentages both avoid an overly reservation of resource blocks. The first percentage ensures a sufficient availability of resource blocks for a best effort traffic, while the second percentage limits the reservation of resource blocks.

The bookkeeper decision engine may store reservation data corresponding to the indications of the availability request in a reservation database of the resource reservation system first, e.g. after confirming the availability, as temporary and second, upon a reservation confirmation received from the business support system, as final. Entries of the reservation database correspond to reservations of spectral resources. The temporary storage prevents the confirmed available resource blocks from being simultaneously reserved otherwise during the reservation process. The final storage, upon the reservation confirmation, excludes the reserved resource blocks from the available resource blocks.

Advantageously, assigning the indicated QoS comprises authorizing the terminal device by means of a subscriber identity module (SIM) of the terminal device. The communication network authorizes the terminal device when providing the upcoming connection. However, an unauthorized terminal device may use reserved resource blocks not being used by the authorized terminal. Authorized terminal devices, i.e. terminal devices indicated by the confirmation request, primarily benefit from the reserved resource blocks but do not prevent a best effort use of the reserved resource blocks.

Another aspect of the invention is a resource reservation system comprising a business support system. Communication networks with a business support system are commonly used. Hence, there are many possible applications for the invention.

According to the invention, the communication network comprises a bookkeeper decision engine and the communication network is configured for carrying out a method according to the invention. The bookkeeper decision engine is a central and essential network entity enabling the communication network for participating in the inventive method. Due to the bookkeeper decision engine, the communication network is enabled to reliably allocate spectral resources to an upcoming connection of a terminal device.

Still another object of the invention is a computer program product for a computing device, the computer program product comprising a storage medium storing a program code readable by the computing device. The storage medium may comprise a CD, a DVD, an USB device, a hard disk, a solid state disk, a disk array, a RAM chip, an internet cloud and the like.

According to the invention, the program code causes the computing device to participate in a method according to the invention as a business support system, a service management and orchestration engine, a bookkeeper decision engine, a QoS prediction service or a capacity usage policy manager of a resource reservation system according to the invention when being executed by a processor of the computing device. The computer program product enables the computing device to participate in the inventive method as a required entity or as an optional entity.

Preferably, the program code implements a QoS reservation API for the service management and orchestration engine, a capacity usage policy API for the capacity usage policy manager and/or a QoS prediction API for the QoS prediction service, the bookkeeper decision engine supporting said APIs (Application Programming Interface). The QoS reservation API, the capacity usage policy API and the QoS prediction API provide the bookkeeper decision engine with an operational connection to the service management and orchestration engine, the capacity usage policy manager and the QoS prediction service, respectively.

It is an essential advantage of the method according to the invention that a communication network is functionally extended for reserving spectral resources, i.e. resource blocks, in advance. Due to the reservation capability, a terminal device is reliably provided by the communication network with a connection requiring a QoS. A user of the terminal device and a provider of an application or a service accessed by the terminal device pleasantly experience a high quality of the communication network.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of two exemplary embodiments and with reference to the drawings. Like components are indicated by like reference numerals throughout the drawings.

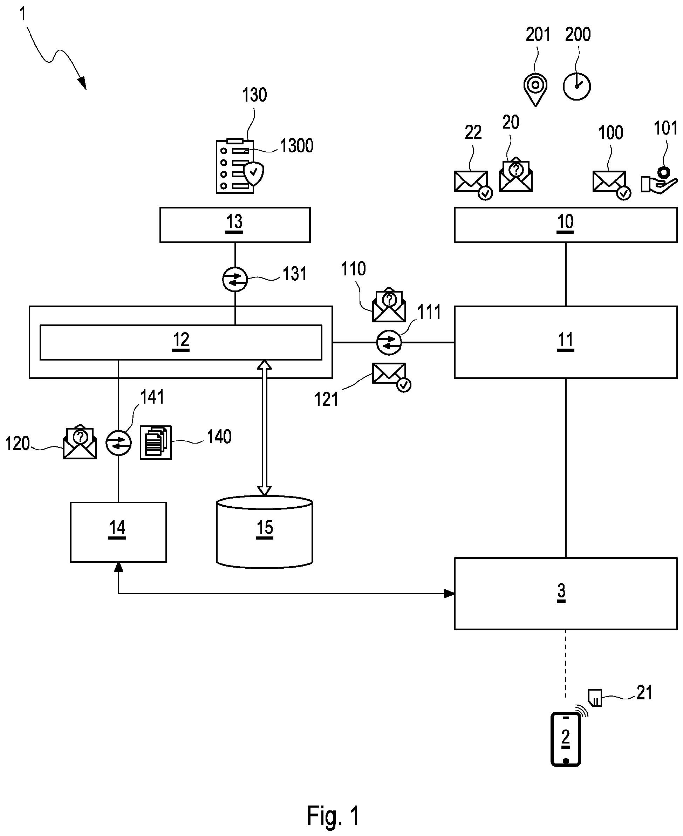

- Fig. 1: schematically shows an entity diagram of a resource reservation system according to the invention for a communication network.

Fig. 1 schematically shows an entity diagram of a resource reservation system 1 according to the invention for a communication network 3. The resource reservation system 1 comprises a business support system 10 and a bookkeeper decision engine 12 and may further comprise a service management and orchestration engine 11 preferably having an QoS reservation API 111, a capacity usage policy manager 13 preferably having a capacity usage policy API 131, a QoS prediction service 14 preferably having a QoS prediction API 141 and a reservation database 15.

Said entities of the resource reservation system 1 may be implemented by means of a computer program product according to the invention for a computing device. The computer program product comprises a storage medium storing a program code readable by the computing device. The program code causes the computing device to participate in a method for operating the communication network 3 described below as a business support system 10, a service management and orchestration engine 11, a bookkeeper decision engine 12, a QoS prediction service 14 or a capacity usage policy manager 13 of the resource reservation system 1 when being executed by a processor of the computing device.

The program code preferably implements the QoS reservation API 111 for the service management and orchestration engine 11, a capacity usage policy API 131 for the capacity usage policy manager 13 or a QoS prediction API 141 for the QoS prediction service 14, the bookkeeper decision engine 12 supporting said APIs 111, 131, 141.

The resource reservation system 1 is configured for participating in a method according to the invention as follows for operating the communication network 3.

The business support system 10 of the resource reservation system 1 receives a reservation request 20. The reservation request 20 indicates a QoS for an upcoming connection to be provided by a communication network for a terminal device 2 and an application or service accessed by the terminal device 2 via the upcoming connection. The reservation request 20 may further indicate a time 200 of the upcoming connection, a location 201 of the terminal device 2 at the indicated time 200 and/or a number of upcoming connections requiring the indicated QoS.

The business support system 10 has an availability of the indicated QoS for the upcoming connection checked by the bookkeeper decision engine 12 of the resource reservation system 1 and sends a reservation confirmation 100 when the availability of the indicated QoS is confirmed by the bookkeeper decision engine 12.

Having the availability checked comprises sending an availability request 110 to the bookkeeper decision engine 12 via the service management and orchestration engine 11, the availability request 110 comprising indications of the reservation request 20, and receiving an availability confirmation 121 from the bookkeeper decision engine 12 via the service management and orchestration engine 11 when the bookkeeper decision engine 12 finds an availability of the indicated QoS.

Finding the availability comprises sending a QoS prediction request 120 to a QoS prediction service 14 of the resource reservation system 1 and receiving a QoS prediction report 140 from the QoS prediction service 14, the QoS prediction request 120 comprising indications of the availability request 110 and the QoS prediction report 140 indicating a highest available QoS, a determined number of resource blocks required for the indicated QoS, a number of available resource blocks and a number of free resource blocks at the location 201 of the terminal device 2.

The bookkeeper decision engine 12 or the QoS prediction service 14 may determine the number of resource blocks required for the indicated QoS dependent of the location 201 of the terminal device 2 and a device capability of the terminal device 2 by means of an estimation or a calculation.

The capacity usage policy manager 13 of the resource reservation system 1 provides the bookkeeper decision engine 12 with a capacity usage policy 130 and the bookkeeper decision engine 12 finds the availability by applying the provided capacity usage policy 130 to the QoS prediction report 140.

The capacity usage policy manager 13 selects the capacity usage policy 130 dependent of the indicated application or service and provides the selected capacity usage policy 130.

The bookkeeper decision engine 12 may find the availability when the calculated number of the resource blocks required for the indicated QoS is lower than a predetermined first percentage of free resource blocks and a number of reserved resource blocks is lower than a predetermined second percentage of available resource blocks, the first percentage and the second percentage being defined by availability rules 1300 of the capacity usage policy 130.

The bookkeeper decision engine 12 advantageously stores reservation data corresponding to the indications of the availability request 110 in a reservation database 15 of the resource reservation system 1 first as temporary and second, upon a reservation confirmation 22 received from the business support system 10, as final.

The business support system 10 preferably sends a reservation offer 101 when the availability of the indicated QoS is not confirmed, the reservation offer 101 indicating an available lower QoS for the upcoming connection.

The communication network 3 will provide the upcoming connection with the indicated QoS assigned for the terminal device 2. Assigning the indicated QoS may comprise authorizing the terminal device 2 by means of a subscriber identity module 21 of the terminal device 2.

The reservation request 20, the reservation confirmation 100 and the reservation offer 101 may be transmitted using a dedicated protocol and/or at a specific QoS.

### Reference numerals

- 1: resource reservation system
- 10: business support system (BSS)
- 100: reservation confirmation
- 101: reservation offer
- 11: service management & orchestration (SMO)
- 110: availability request
- 111: QoS reservation API
- 12: bookkeeper decision engine (BDE)
- 120: QoS prediction request
- 121: availability confirmation
- 13: capacity usage policy manager
- 130: capacity usage policy
- 1300: availability rule
- 131: capacity usage policy API
- 14: QoS prediction engine
- 140: QoS prediction report
- 141: QoS prediction API
- 15: reservation database
- 2: terminal device
- 20: reservation request
- 200: time
- 201: location
- 21: subscriber identity module
- 22: reservation confirmation
- 3: communication network

## Claims

1. A method for operating a communication network (3), wherein
- a business support system (10) of a resource reservation system (1) receives a reservation request (20), the reservation request (20) indicating a QoS, Quality of Service, for an upcoming connection to be provided by the communication network (3) for a terminal device (2) and an application or service accessed by the terminal device (2) via the upcoming connection at a time distance from a reservation;
- the business support system (10) has an availability of the indicated QoS for the upcoming connection checked by a bookkeeper decision engine (12) of the resource reservation system (1), wherein having the availability checked comprises sending an availability request (110) to the bookkeeper decision engine (12) via a service management and orchestration engine (11) of the resource reservation system (1), the availability request (110) comprising indications of the reservation request (20), and receiving an availability confirmation (121) from the bookkeeper decision engine (12) via the service management and orchestration engine (11) when the bookkeeper decision engine (12) finds an availability of the indicated QoS, wherein finding the availability comprises sending a QoS prediction request (120) to a QoS prediction service (14) of the resource reservation system (1) and receiving a QoS prediction report (140) from the QoS prediction service (14), the QoS prediction request (120) comprising indications of the availability request (110) and the QoS prediction report (140) indicating a highest available QoS, a determined number of resource blocks required for the indicated QoS, a number of available resource blocks and a number of free resource blocks at the location (201) of the terminal device (2);
- a capacity usage policy manager (13) of the resource reservation system (1) provides the bookkeeper decision engine (12) with a capacity usage policy (130) and the bookkeeper decision engine (12) finds the availability by applying the provided capacity usage policy (130) to the QoS prediction report (140);
- the business support system (10) sends a reservation confirmation (100) when the availability of the indicated QoS is confirmed by the bookkeeper decision engine (12);
- the communication network (3) will provide the upcoming connection with the indicated QoS assigned for the terminal device (2) at the time distance from the reservation,
**characterized in that**
the capacity usage policy manager (13) selects the capacity usage policy (130) dependent on the indicated application or service and provides the selected capacity usage policy (130).

2. The method according to claim 1, wherein the business support system (10) sends a reservation offer (101) when the availability of the indicated QoS is not confirmed, the reservation offer (101) indicating an available lower QoS for the upcoming connection.

3. The method according to claim 1 or 2, wherein the reservation request (20), the reservation confirmation (100) and the reservation offer (101) are transmitted using a dedicated protocol and/or at a specific QoS.

4. The method according to one of claims 1 to 3, wherein the reservation request (20) indicates a time (200) of the upcoming connection, a location (201) of the terminal device (2) at the indicated time (200) and/or a number of upcoming connections requiring the indicated QoS.

5. The method according to one of claims 1 to 4, wherein the bookkeeper decision engine or the QoS prediction service (14) determines the number of resource blocks required for the indicated QoS dependent of the location (201) of the terminal device (2) and a device capability of the terminal device (2) by means of an estimation or a calculation.

6. The method according to claims 1 to 5, wherein the bookkeeper decision engine (12) finds the availability when the calculated number of the resource blocks required for the indicated QoS is lower than a predetermined first percentage of free resource blocks and a number of reserved resource blocks is lower than a predetermined second percentage of available resource blocks, the first percentage and the second percentage being defined by availability rules (1300) of the capacity usage policy (130).

7. The method according to one of claims 1 to 6, wherein the bookkeeper decision engine (12) stores reservation data corresponding to the indications of the availability request (110) in a reservation database (15) of the resource reservation system (1) first as temporary and second, upon a reservation confirmation (22) received from the business support system (10), as final.

8. The method according to one of claims 1 to 7, wherein assigning the indicated QoS comprises authorizing the terminal device (2) by means of a subscriber identity module (21) of the terminal device (2).

9. A resource reservation system (1) for a communication network (3), comprising a business support system (10) and a bookkeeper decision engine (12) and being configured for carrying out the method according to one of claims 1 to 8 for operating the communication network (3).

10. A computer program product for a computing device, comprising a storage medium storing a program code readable by the computing device, the program code causing the computing device to carry out the method according to one of claims 1 to 8 as a business support system (10), a service management and orchestration engine (11), a bookkeeper decision engine (12), a QoS, Quality of Service, prediction service (14) or a capacity usage policy manager (13) of a resource reservation system (1) according to claim 9 when being executed by a processor of the computing device.

11. The computer program product according to claim 10, wherein the program code implements a QoS reservation API (111), Application Programming Interface, for the service management and orchestration engine (11), a capacity usage policy API (131) for the capacity usage policy manager (13) or a QoS prediction API (141) for the QoS prediction service (14), the bookkeeper decision engine (12) supporting said APIs (111, 131, 141).

## Patentansprüche

1. Verfahren zum Betreiben eines Kommunikationsnetzwerks (3), wobei
- ein Business-Support-System (10) eines Ressourcenreservierungssystems (1) eine Reservierungsanfrage (20) empfängt, wobei die Reservierungsanfrage (20) eine QoS (Quality of Service) für eine bevorstehende Verbindung angibt, die von dem Kommunikationsnetz (3) für ein Endgerät (2) und eine Anwendung oder einen Dienst bereitzustellen ist, auf die von dem Endgerät (2) über die bevorstehende Verbindung mit einem zeitlichen Abstand von einer Reservierung zugegriffen wird;
- das Business-Support-System (10) eine Verfügbarkeit der angegebenen QoS für die bevorstehende Verbindung durch eine Buchhalter-Entscheidungs-Engine (12) des Ressourcenreservierungssystems (1) prüfen lässt, wobei das Prüfen der Verfügbarkeit ein Senden einer Verfügbarkeitsanfrage (110) an die Buchhalter-Entscheidungs-Engine (12) über eine Service-Management- und Orchestrierungs-Engine (11) des Ressourcenreservierungssystems (1) umfasst, wobei die Verfügbarkeitsanfrage (110) Angaben zu der Reservierungsanfrage (20) umfasst, und ein Empfangen einer Verfügbarkeitsbestätigung (121) von der Buchhalter-Entscheidungs-Engine (12) über die Service-Management- und Orchestrierungs-Engine (11) umfasst, wenn die Buchhalter-Entscheidungs-Engine (12) eine Verfügbarkeit der angegebenen QoS feststellt, wobei das Feststellen der Verfügbarkeit ein Senden einer QoS-Prädiktionsanfrage (120) an einen QoS-Prädiktionsdienst (14) des Ressourcenreservierungssystems (1) und ein Empfangen eines QoS-Prädiktionsberichts (140) von dem QoS-Prädiktionsdienst (14) umfasst, wobei die QoS-Prädiktionsanfrage (120) Angaben zu der Verfügbarkeitsanfrage (110) umfasst und der QoS-Prädiktionsbericht (140) eine höchste verfügbare QoS, eine ermittelte Anzahl von für die angegebene QoS erforderlichen Ressourcenblöcken, eine Anzahl verfügbarer Ressourcenblöcke und eine Anzahl freier Ressourcenblöcke an dem Standort (201) des Endgeräts (2) angibt;
- ein Kapazitätsnutzungsrichtlinien-Manager (13) des Ressourcenreservierungssystems (1) der Buchhalter-Entscheidungs-Engine (12) eine Kapazitätsnutzungsrichtlinie (130) bereitstellt und die Buchhalter-Entscheidungs-Engine (12) die Verfügbarkeit durch Anwenden der bereitgestellten Kapazitätsnutzungsrichtlinie (130) auf den QoS-Prädiktionsbericht (140) feststellt;
- das Business-Support-System (10) eine Reservierungsbestätigung (100) sendet, wenn die Verfügbarkeit der angegebenen QoS durch die Buchhalter-Entscheidungs-Engine (12) bestätigt wird;
- das Kommunikationsnetz (3) die bevorstehende Verbindung zu einem Zeitpunkt mit einem zeitlichen Abstand von der Reservierung mit der dem Endgerät (2) zugewiesenen angegebenen QoS bereitstellen wird;
**dadurch gekennzeichnet, dass**
der Kapazitätsnutzungsrichtlinien-Manager (13) die Kapazitätsnutzungsrichtlinie (130) in Abhängigkeit von der angegebenen Anwendung oder dem angegebenen Dienst auswählt und die ausgewählte Kapazitätsnutzungsrichtlinie (130) bereitstellt.

2. Verfahren nach Anspruch 1, wobei das Business-Support-System (10) ein Reservierungsangebot (101) sendet, wenn die Verfügbarkeit der angegebenen QoS nicht bestätigt wird, wobei das Reservierungsangebot (101) eine verfügbare niedrigere QoS für die bevorstehende Verbindung angibt.

3. Verfahren nach Anspruch 1 oder 2, wobei die Reservierungsanfrage (20), die Reservierungsbestätigung (100) und das Reservierungsangebot (101) unter Verwendung eines dedizierten Protokolls und/oder mit einer bestimmten QoS übertragen werden.

4. Verfahren nach einem der Ansprüche 1 bis 3, wobei die Reservierungsanfrage (20) einen Zeitpunkt (200) der bevorstehenden Verbindung, einen Standort (201) des Endgeräts (2) zu dem angegebenen Zeitpunkt (200) und/oder eine Anzahl bevorstehender Verbindungen angibt, die die angegebene QoS erfordern.

5. Verfahren nach einem der Ansprüche 1 bis 4, wobei die Buchhalter-Entscheidungs-Engine oder der QoS-Prädiktionsdienst (14) die Anzahl der für die angegebene QoS erforderlichen Ressourcenblöcke in Abhängigkeit von dem Standort (201) des Endgeräts (2) und einer Gerätefähigkeit des Endgeräts (2) mittels einer Schätzung oder einer Berechnung bestimmt.

6. Verfahren nach den Ansprüchen 1 bis 5, wobei die Buchhalter-Entscheidungs-Engine (12) die Verfügbarkeit feststellt, wenn die errechnete Anzahl der für die angegebene QoS erforderlichen Ressourcenblöcke niedriger ist als ein vorgegebener erster Prozentsatz freier Ressourcenblöcke und eine Anzahl reservierter Ressourcenblöcke niedriger ist als ein vorgegebener zweiter Prozentsatz verfügbarer Ressourcenblöcke, wobei der erste Prozentsatz und der zweite Prozentsatz durch Verfügbarkeitsregeln (1300) der Kapazitätsnutzungsrichtlinie (130) definiert sind.

7. Verfahren nach einem der Ansprüche 1 bis 6, wobei die Buchhalter-Entscheidungs-Engine (12) Reservierungsdaten entsprechend den Angaben der Verfügbarkeitsanfrage (110) in einer Reservierungsdatenbank (15) des Ressourcenreservierungssystems (1) zuerst als vorläufig und dann nach Empfang einer von dem Business-Support-System (10) empfangenen Reservierungsbestätigung (22) als endgültig speichert.

8. Verfahren nach einem der Ansprüche 1 bis 7, wobei das Zuweisen der angegebenen QoS das Autorisieren des Endgeräts (2) mittels eines Teilnehmeridentitätsmoduls (21) des Endgeräts (2) umfasst.

9. Ressourcenreservierungssystem (1) für ein Kommunikationsnetz (3), umfassend ein Business-Support-System (10) und eine Buchhalter-Entscheidungs-Engine (12), wobei das Ressourcenreservierungssystem (1) dazu ausgebildet ist, das Verfahren nach einem der Ansprüche 1 bis 8 zum Betreiben des Kommunikationsnetzes (3) durchzuführen.

10. Computerprogrammprodukt für eine Rechenvorrichtung, umfassend ein Speichermedium, auf dem ein von der Rechenvorrichtung lesbarer Programmcode gespeichert ist, wobei der Programmcode bewirkt, dass die Rechenvorrichtung bei Ausführung durch einen Prozessor der Rechenvorrichtung das Verfahren nach einem der Ansprüche 1 bis 8 als Business-Support-System (10), Service-Management- und Orchestrierungs-Engine (11), Buchhalter-Entscheidungs-Engine (12), QoS-(Quality-of-Service-) Prädiktionsdienst (14) oder Kapazitätsnutzungsrichtlinien-Manager (13) eines Ressourcenreservierungssystems (1) nach Anspruch 9 durchführt.

11. Computerprogrammprodukt nach Anspruch 10, wobei der Programmcode eine QoS-Reservierungs-API (111) (Application Programming Interface) für die Service-Management- und Orchestrierungs-Engine (11), eine Kapazitätsnutzungsrichtlinien-APl (131) für den Kapazitätsnutzungsrichtlinien-Manager (13) oder eine QoS-Prädiktions-API (141) für den QoS-Prädiktionsdienst (14) implementiert, wobei die Buchhalter-Entscheidungs-Engine (12) die genannten APIs (111, 131, 141) unterstützt.

## Revendications

1. Procédé d'exploitation d'un réseau de communication (3), dans lequel
- un système de soutien commercial (10) d'un système de réservation de ressources (1) reçoit une demande de réservation (20), ladite demande de réservation (20) indiquant une qualité de service (QoS) pour une connexion à venir devant être fournie par le réseau de communication (3) à un terminal (2) et à une application ou un service auquel le terminal (2) accède via ladite connexion à venir, à un certain délai après une réservation ;
- le système de soutien commercial (10) fait vérifier la disponibilité de la qualité de service (QoS) indiquée pour la connexion à venir par un moteur de décision et de comptabilité (12) du système de réservation de ressources (1), la vérification de la disponibilité comprenant un envoi d'une demande de disponibilité (110) au moteur de décision et de comptabilité (12) via un moteur de gestion et d'orchestration des services (11) du système de réservation de ressources (1), la demande de disponibilité (110) comprenant des indications relatives à la demande de réservation (20), et une réception d'une confirmation de disponibilité (121) provenant du moteur de décision et de comptabilité (12) via le moteur de gestion et d'orchestration des services (11) lorsque le moteur de décision et de comptabilité (12) constate une disponibilité de la qualité de service (QoS) indiquée, la constatation de la disponibilité comprenant un envoi d'une demande de prédiction de la qualité de service (QoS) (120) à un service de prédiction de la qualité de service (QoS) (14) du système de réservation de ressources (1) et une réception d'un rapport de prédiction de la qualité de service (QoS) (140) provenant du service de prédiction de la qualité de service (QoS) (14), la demande de prévision de la qualité de service (QoS) (120) comprenant des indications relatives à la demande de disponibilité (110) et le rapport de prévision de la qualité de service (QoS) (140) indiquant la meilleure qualité de service disponible, un nombre déterminé de blocs de ressources requis pour la qualité de service (QoS) indiquée, un nombre de blocs de ressources disponibles et un nombre de blocs de ressources libres à l'emplacement (201) du terminal (2);
- un gestionnaire de politiques d'utilisation des capacités (13) du système de réservation de ressources (1) fournit au moteur de décision et de comptabilité (12) une politique d'utilisation des capacités (130) et le moteur de décision et de comptabilité (12) détermine la disponibilité en appliquant la politique d'utilisation des capacités (130) fournie au rapport de prévision de la qualité de service (QoS) (140);
- le système de soutien commercial (10) envoie une confirmation de réservation (100) lorsque la disponibilité de la qualité de service (QoS) indiquée est confirmée par le moteur de décision et de comptabilité (12) ;
- le réseau de communication (3) fournit la connexion à venir avec la qualité de service (QoS) indiquée attribuée au terminal (2) à un certain délai par rapport à la réservation,
**caractérisé en ce que**
le gestionnaire de politiques d'utilisation des capacités (13) sélectionne la politique d'utilisation des capacités (130) en fonction de l'application ou du service indiqué et fournit la politique d'utilisation des capacités (130) sélectionnée.

2. Procédé selon la revendication 1, dans lequel le système de soutien commercial (10) envoie une offre de réservation (101) lorsque la disponibilité de la qualité de service (QoS) indiquée n'est pas confirmée, l'offre de réservation (101) indiquant une qualité de service (QoS) inférieure disponible pour la connexion à venir.

3. Procédé selon la revendication 1 ou 2, dans lequel la demande de réservation (20), la confirmation de réservation (100) et l'offre de réservation (101) sont transmises à l'aide d'un protocole dédié et/ou avec une qualité de service (QoS) spécifique.

4. Procédé selon l'une des revendications 1 à 3, dans lequel la demande de réservation (20) indique une heure (200) de la connexion à venir, un emplacement (201) du terminal (2) à l'heure indiquée (200) et/ou un nombre de connexions à venir nécessitant la qualité de service (QoS) indiquée.

5. Procédé selon l'une des revendications 1 à 4, dans lequel le moteur de décision et de comptabilité ou le service de prédiction de la qualité de service (14) détermine, au moyen d'une estimation ou d'un calcul, le nombre de blocs de ressources requis pour la qualité de service (QoS) indiquée, en fonction de l'emplacement (201) du terminal (2) et une capacité du terminal (2).

6. Procédé selon les revendications 1 à 5, dans lequel le moteur de décision et de comptabilité (12) constate la disponibilité lorsque le nombre calculé de blocs de ressources requis pour la qualité de service (QoS) indiquée est inférieur à un premier pourcentage prédéterminé de blocs de ressources libres et qu'un nombre de blocs de ressources réservés est inférieur à un deuxième pourcentage prédéterminé de blocs de ressources disponibles, le premier pourcentage et le deuxième pourcentage étant définis par des règles de disponibilité (1300) de la politique d'utilisation des capacités (130).

7. Procédé selon l'une des revendications 1 à 6, dans lequel le moteur de décision et de comptabilité (12) stocke des données de réservation correspondant aux indications de la demande de disponibilité (110) dans une base de données de réservation (15) du système de réservation de ressources (1), d'abord à titre provisoire, puis, à la suite d'une confirmation de réservation (22) reçue du système de soutien commercial (10), à titre définitif.

8. Procédé selon l'une des revendications 1 à 7, dans lequel l'attribution de la qualité de service (QoS) indiquée comprend l'authentification du terminal (2) au moyen d'un module d'identité d'abonné (21) du terminal (2).

9. Système de réservation de ressources (1) destiné à un réseau de communication (3), comprenant un système de soutien commercial (10) et un moteur de décision et de comptabilité (12) et configuré pour mettre en œuvre le procédé selon l'une des revendications 1 à 8 pour exploiter le réseau de communication (3).

10. Produit logiciel destiné à un dispositif informatique, comprenant un support de stockage sur lequel est stocké un code de programme lisible par le dispositif informatique, ledit code de programme amenant le dispositif informatique à mettre en œuvre le procédé selon l'une des revendications 1 à 8 en tant que système de soutien commercial (10), moteur de gestion et d'orchestration des services (11), moteur de décision et de comptabilité (12), service de prédiction de la qualité de service (QoS) (14) ou gestionnaire de politiques d'utilisation des capacités (13) d'un système de réservation de ressources (1) selon la revendication 9, lorsqu'il est exécuté par un processeur du dispositif informatique.

11. Produit logiciel selon la revendication 10, dans lequel le code de programme met en œuvre une interface de programmation d'applications (API) de réservation de la qualité de service (QoS) (111) pour le moteur de gestion et d'orchestration des services (11), une API de politiques d'utilisation des capacités (131) pour le gestionnaire de politiques d'utilisation des capacités (13) ou une API de prédiction de la qualité de service (141) pour le service de prédiction de la qualité de service (14), le moteur de décision et de comptabilité (12) prenant en charge lesdites API (111, 131, 141).
